# EUROPÄISCHE PATENTANMELDUNG

(11) **EP 4 296 378 A1**
(43) Veröffentlichungstag der Anmeldung: **27.12.2023**
(21) Anmeldenummer: 23172721.5
(22) Anmeldetag: 11.05.2023
(51) Int. Cl.: C21D 7/10, C21D 9/02, C22C 38/02, B21D 53/16, F16F 1/32, C22C 38/44, F16B 39/24, B21D 35/00, B21D 53/88, B62D 25/00, B62D 29/00, B21D 22/02

(54) **VERFAHREN ZUR HERSTELLUNG EINER TELLERFEDER**

(30) Priorität: 22.06.2022 DE 102022115546
(71) Anmelder: Teckentrup GmbH & Co. KG, 58849 Herscheid (DE)
(72) Erfinder: Volborth, Thomas, 58553 Halver (DE)
(74) Vertreter: Patentanwälte Dörner & Kötter PartG mbB

(57) **Zusammenfassung**

Die Erfindung betrifft ein Verfahren zur Herstellung einer Tellerfeder, wobei aus einer Ringscheibe aus Edelstahl aus X5CrNiMo17-12-2 in einem kombinierten Umform- und Prägevorgang eine Tellerfedernform bei gleichzeitiger Reduzierung der Materialdicke um mehr als 7% erzeugt wird.

## Beschreibung

Die Erfindung betrifft ein Verfahren zur Herstellung einer Tellerfeder, insbesondere einer Spannscheibe, aus Edelstahl X5CrNiMo17-12-2 nach dem Patentanspruch 1.

Die Sicherungswirkung von Tellerfedern besteht hauptsächlich aus Kraftschluss. Tellerfedern, oftmals auch als Spannscheiben ausgeführt, haben die Aufgabe, ein Loslösen bzw. Lockern einer Schraubenverbindung zu unterbinden. Tellerfedern dienen als Schraubensicherungselement und haben die Aufgabe, Lockerungsvorgängen bei Schraubenverbindungen entgegenzuwirken. Solche Lockerungsvorgänge ergeben sich aus Vorspannkraftverlusten in den Schraubenverbindungen, welche als Folge von Setz- und/oder Kriechvorgängen bei den miteinander verschraubten Teilen auftreten.

Um derartigen Lockerungsvorgängen entgegenzutreten ist die Federkraft der Tellerfedern derart zu bemessen, dass sie einen durch die Setz- und/oder Kriechvorgänge hervorgerufenen Vorspannkraftverlust soweit ausgleichen können, dass die für die Betriebssicherheit der Schraubverbindung erforderliche Klemmkraft erhalten bleibt.

Bei hohen Anforderungen an den Korrosionsschutz kommen regelmäßig Schraubenverbindungen Tellerfedern aus Edelstahl zum Einsatz. Die Schraubensicherungselemente sind bei Verbindungen mit Edelstahlschrauben ebenfalls aus Edelstahl hergestellt. Neben den guten Korrosionsschutzeigenschaften von Edelstahl wird durch das gleiche galvanische Potenzial der Schraubensicherungselemente Kontaktkorrosion vermieden.

Edelstahl-Tellerfedern werden allgemein aus dem kostengünstigen Edelstahl X10CrNi18-8 mit der Werkstoffnummer 1.4310 gemäß DIN EN 10027-2:2015-07 (kurz: Edelstahl 1.4310) hergestellt, dessen Hauptanwendungsbereich aufgrund seiner guten federnden Eigenschaften in der Herstellung von Federn liegt. Tellerfedern aus diesem Chrom-Nickel-Stahl haben sich in der Praxis in vielen Bereichen bewährt. Unter normalen Umweltbedingungen weist dieser Edelstahl gute Korrosionseigenschaften auf.

Jedoch neigt der Edelstahl 1.4310 durch seinen niedrigen Kohlenstoffgehalt zur Sensibilisierung. Die Bildung von Chromkarbiden und die damit verbundenen chromverarmten Bereiche in der Umgebung dieser Ausscheidung machen diesen Stahl anfällig für interkristalline Korrosion. Daher ist dieser Edelstahl anfällig für Korrosion in Salz- oder Chlorkonzentrationen. In der Lebensmittelindustrie sowie auch im Bereich der Bahn, wo aggressive Reinigungsmittel zum Einsatz kommen, die stark Chlor- und/oder säurehaltig sind, ist daher Edelstahl 1.4310 nicht geeignet.

Hier wird regelmäßig der gleichsam kostengünstige Edelstahl X5CrNiMo17-12-2 mit der Werkstoffnummer 1.4401 gemäß DIN EN 10027-2:2015-07 (kurz: Edelstahl 1.4401) eingesetzt. Dieser Chrom-Nickel-Molybdän-Stahl weist eine gute Beständigkeit gegenüber chlorhaltigen Medien und nicht oxidierenden Säuren auf. Daher zeichnet sich dieser Edelstahl 1.4401 in der Lebensmittelindustrie sowie auch im Bereich der Bahn durch hervorragende Korrosionsbeständigkeit auf. Nachteilig an diesem Edelstahl 1.4401 sind jedoch seine nur mäßigen Federeigenschaften.

Eine Erhöhung der Federeigenschaften von Edelstahl kann durch ein Wärmebehandlungsverfahren realisiert werden. Dieses Wärmebehandlungsverfahren ist jedoch zum einen sehr teuer, zum anderen werden durch das Wärmebehandlungsverfahren die Korrosionseigenschaften negativ beeinflusst. Nicht zuletzt sind die im Ergebnis erzielbaren Federeigenschaften regelmäßig nicht ausreichend, um die gestellten Anforderungen zu erfüllen. Vor diesem Hintergrund werden wärmebehandelte Edelstahlwerkstoffe für Schraubensicherungselemente in der Praxis nur selten eingesetzt.

Um bei dem Edelstahl 1.4401 eine Verbesserung der Federeigenschaften zu erzielen, wird durch Kaltverfestigung beim Walzen des Bandes eine Verfestigung der Oberfläche bewirkt. Diese Verfestigung führt zu einer begrenzten Federwirkung bei dünnen Blechstärken bis 1 mm, wobei die Federwirkung mit abnehmender Blechstärke zunimmt. Auffällig an diesem Werkstoff ist, dass dieser kalt verfestigt bei größeren Dicken nur eine sehr eingeschränkte Federwirkung aufweist. Daher haben derzeit zum Einsatz kommende Tellerfedern aus Edelstahl 1.4401 nur begrenzte Sicherungseigenschaften und sind zum Sitzausgleich bei Schraubenverbindungen nicht ausreichend.

Hier setzt die vorliegende Erfindung an. Der Erfindung liegt die Aufgabe zugrunde, ein Verfahren zur Herstellung einer Tellerfeder aus Edelstahl 1.4401 bereitzustellen, deren Sicherungseigenschaften verbessert ist. Gemäß der Erfindung wird diese Aufgabe durch Verfahren mit den Merkmalen des Patentanspruchs 1 gelöst.

Mit der Erfindung ist ein Verfahren zur Herstellung einer Tellerfeder aus Edelstahl 1.4401 bereitzustellen, deren Sicherungseigenschaften verbessert ist. Überraschend hat sich gezeigt, dass aus einer ebenen Ringscheibe aus Edelstahl 1.4401 durch einen kombinierten Umform- und Prägevorgang mit Reduzierung der Materialdicke um mehr als 7% eine Tellerfeder mit hoher Federwirkung herstellbar ist, und zwar insbesondere auch dann, wenn die Ringscheibe eine Materialdicke von größer 2 mm aufweist.

In Weiterbildung der Erfindung wird durch den Umform- und Prägevorgang eine definierte Reduzierung der Materialdicke um mehr als 10%, bevorzugt um mehr als 20% bewirkt. Hierdurch werden die Federeigenschaften weiter verbessert.

In Weiterbildung der Erfindung wird in dem kombinierten Umform- und Prägevorgang auf wenigstens eine Seite der Scheibe eine Kordierung eingebracht. Hierdurch ist eine weitere Optimierung der Federeigenschaften ermöglicht. Ergebnisse von durchgeführten Prozessversuchen sind in den Figuren dargestellt und nachfolgend im Einzelnen beschrieben. Es zeigen:
- Figur 1: Die Darstellung einer Edelstahl-Tellerfeder a) In der Draufsicht; b) Im Querschnitt;
- Figur 2: die Messwerte der Restklemmkraft von drei mit 31,1 kN belasteten Tellerfedern gemäß Figur 1 nach 0,02 mm Entlastungsweg: Edelstahl 1.4401 -Tellerfeder, nicht verprägt Edelstahl 1.4401 -Tellerfeder, verprägt Edelstahl 1.4310 - Tellerfeder (Referenz).

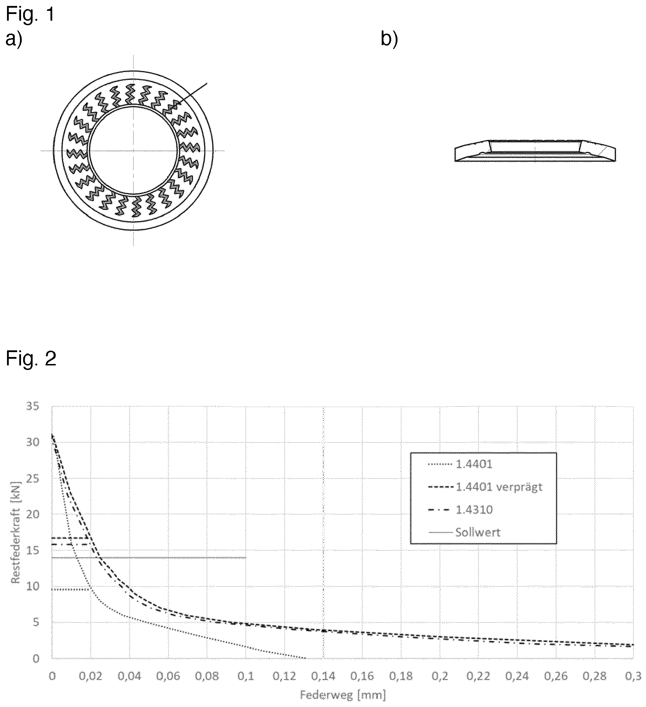

Die als Ausführungsbeispiel gewählte, als Spannscheibe ausgebildete Tellerfeder gemäß Figur 1 ist aus Edelstahl 1.4401 (X5CrNiMo17-12-2) hergestellt und umfasst einen ringförmig ausgebildeten, konvex umgeformten Scheibenkörper, mit einer verprägten Materialdicke von 2,2 mm. In die Oberflächen der Spannscheibe ist jeweils eine Kordierung eingebracht, die im Ausführungsbeispiel in Form einer Sägeverzahnung ausgebildet ist. Zur Erhöhung der Korrosionsbeständigkeit sind die Oberflächen der Spannscheibe poliert.

Die erfindungsgemäße Erhöhung der Federkraft einer Ringscheibe aus Edelstahl 1.4401 durch einen kombinierten Umform- und Prägevorgang, durch den eine Spannscheibenform erzielt wird, wurde in Versuchsreihen nachgewiesen. Es wurden gemäß DIN 267-26:2005-12 Entlastungskennlinien untersucht. Hierbei wird die Anpresskraft entsprechend der Montagevorspannkraft eingestellt. Bei einer Entlastung mit einem Federweg von 0,2 mm wird die Restfederkraft ermittelt.

Es wurde zunächst eine Ringscheibe mit einer Materialdicke von 2,5 mm aus Edelstahl 1.4401 durch einen reinen Umformvorgang in eine Spannscheibenform verbracht (erste Spannscheibe).

Weiterhin wurde eine Ringscheibe mit einer Materialdicke von 2,5 mm aus Edelstahl 1.4401 durch einen erfindungsgemäßen kombinierten Umform- und Prägevorgang in eine Spannscheibenform verbracht, wobei die Materialdicke durch den Prägevorgang definiert auf 2,2 mm verdichtet wurde. Auf beiden Seiten der Spannscheibe wurde eine Kordierung in Form einer Sägeverzahnung eingebracht (zweite Spannscheibe).

Als Referenz wurde eine herkömmliche Spannscheibe aus Edelstahl 1.4310 hinzugenommen.

Diese drei - geometrisch gleichen - Spannscheiben wurden jeweils mit einer Anpresskraft von 31,1 kN beaufschlagt und nachfolgend entlastet. Hierbei wurde die Restfederkraft nach einem Federweg (Entlastungsweg) von 0,02 mm ermittelt. Die Messwerte sind in dem Diagramm in Figur 2 wiedergegeben.

Es ergibt sich bei der ersten Spannscheibe eine Restfederkraft von 9,57 kN. Diese Spannscheibe erfüllt ersichtlich nicht die Anforderungen nach DIN 267-26:2005-12, wonach eine Mindestrestfederkraft (Sollwert) für diese Spannscheibe von 13,995 kN erforderlich ist.

Bei der nach dem erfindungsgemäßen Verfahren hergestellten zweiten Spannscheibe hingegen ergibt sich eine um nahezu 50% verbesserte Restfederkraft von 14,85 kN. Die zweite Spannscheibe erfüllt danach die Anforderungen nach DIN 267-26:2005-12. Die Restfederkraft ist nahezu gleich mit der als Referenzspannscheibe hinzugenommenen Spannscheibe aus Edelstahl 1.4310.

Es wurde hiermit nachgewiesen, dass durch das erfindungsgemäße Verfahren eine Spannscheibe aus Edelstahl 1.4401 herstellbar ist, welche nahezu die gleichen Federeigenschaften aufweist, wie eine herkömmliche Spannscheibe aus Edelstahl 1.4310.

## Patentansprüche

1. Verfahren zur Herstellung einer Tellerfeder, insbesondere einer Spannscheibe, wobei aus einer Ringscheibe aus Edelstahl aus X5CrNiMo17-12-2 in einem kombinierten Umform- und Prägevorgang eine Tellerfedernform bei gleichzeitiger Reduzierung der Materialdicke um mehr als 7% erzeugt wird.

2. Verfahren nach Anspruch 1, **dadurch gekennzeichnet, dass** durch den Umform- und Prägevorgang eine definierte Reduzierung der Materialdicke um mehr als 10%, besonders bevorzugt um mehr als 20% erfolgt.

3. Verfahren nach Anspruch 1 oder 2, **dadurch gekennzeichnet, dass** in dem kombinierten Umform- und Prägevorgang auf wenigstens eine Seite der Scheibe eine Kordierung eingebracht wird.

4. Verfahren nach Anspruch 3, **dadurch gekennzeichnet, dass** die Kordierung als Sägeverzahnung ausgeformt ist.

5. Verfahren nach einem der vorgenannten Ansprüche, **dadurch gekennzeichnet, dass** wenigstens eine Seite der Tellerfeder nachfolgend poliert wird.
